# EUROPÄISCHE PATENTSCHRIFT

(11) **EP 2 759 749 B1**
(45) Veröffentlichungstag und Bekanntmachung des Hinweises auf die Patenterteilung: **28.03.2018**
(21) Anmeldenummer: 13199700.9
(22) Anmeldetag: 27.12.2013
(51) Int. Cl.: F16K 31/06, F16F 9/46, F16F 9/34, G05D 7/06

(54) **Elektromagnetisches Fluidventil**
Electromagnetic fluid valve
Soupape de fluide électromagnétique

(30) Priorität: 24.01.2013 DE 102013100717
(43) Veröffentlichungstag der Anmeldung: 30.07.2014
(73) Patentinhaber: Kendrion (Villingen) GmbH, 78048 Villingen-Schwenningen (DE)
(72) Erfinder: Bergfeld, Björn, 72336 Balingen-Endingen (DE); Brandenburg, Holger, 78048 Villingen-Schwenningen (DE); Ohnmacht, Martin, 78737 Fluorn-Winzeln (DE)
(74) Vertreter: Westphal, Mussgnug & Partner Patentanwälte mbB

(56) Entgegenhaltungen:
- US-A- 2 543 455
- US-A- 4 339 109
- US-A- 5 516 076
- US-A1- 2006 065 870

## Beschreibung

Die Erfindung betrifft ein elektromagnetisches Fluidventil, insbesondere Proportionalventil zur Durchflussregelung eines durch ein Gehäuseteil fließenden Druckmediums gemäß Oberbegriff des Patentanspruchs 1.

Ein solches elektromagnetisches Ventil offenbart die US 2,543,455 A.

Es sind aktiv verstellbare Dämpfersysteme für Fahrzeuge bekannt, die in der Regel nach dem Prinzip eines variablen Öffnungsquerschnitts arbeiten. Solche Dämpfer stellen die entsprechenden Stoßdämpferkennwerte über hydraulische Proportionalventile ein und können an unterschiedliche Fahrsituationen, beispielsweise hinsichtlich der Fahrbahnoberfläche oder an unterschiedliche Kundenwünsche angepasst werden. Die Proportionalventile steuern mit Hilfe eines beweglichen Schiebers, der von einer Magnetspule bewegt wird, kontinuierlich den Fluiddurchfluss im Dämpfer. Je nach Bestromung des elektromagnetischen Proportionalventils wird dessen öldurchflossener Querschnitt verändert. Dies bewirkt eine Veränderung des Druckverlustes, welcher bei zunehmendem Durchfluss degressiv verlaufen sollte. Hierfür müssen die resultierenden Strömungskräfte auf den querschnittverändernden Ventilschieber in Öffnungsrichtung möglichst klein gehalten werden, da ansonsten der Ventilschieber nicht genügend Querschnitt freigibt und dadurch der Druckverlust bei steigendem Volumenstrom einen progressiven Verlauf aufweist.

Ein anderes Proportionalventil ist beispielsweise aus der DE 10 2007 005 466 A1 bekannt, dessen Ventilschieber zur elektromagnetischen Betätigung des Ventils direkt mit einem Magnetanker verbunden ist. Mit einer am Ventilschieber vorgesehenen Steuerkante wird der Querschnitt eines den Ventileinlass mit einem Ventilauslass verbindenden Durchlasses im

Gehäuse kontinuierlich verändert. Der Ventilschieber ist bei diesem Proportionalventil als Außenschieber ausgebildet und wird auf einer einlassseitig im Ventilgehäuse befestigten rohrförmigen Schieberführung gelagert und geführt. Damit ist dieser Ventilschieber zum einen über den Magnetanker und zum anderen über diese rohrförmige Schieberführung gelagert. Durch diese zweifache Lagerung des Ventilschiebers müssen die beteiligten Bauteile hohe Fertigungsgenauigkeiten erfüllen, die ebenso zu hohen Fertigungskosten führen.

Häufig werden bei dem bekanntem elektromagnetischen Fluidventilen eine Vielzahl von radialen Zulauföffnungen im Gehäuse vorgesehen. Das Druckmedium wird durch diese radialen Zulauföffnungen in das Innere des Gehäuses des elektromagnetischen Fluidventils geleitet und dort über einen Kanal zumindestens einer Ablauföffnung geführt. Über einen geeigneten beweglichen Schieber erfolgt eine Durchflussregelung des Druckmediums, indem der bewegliche Schieber die Zulauföffnungen mehr oder weniger verschließt und so das Druckmedium im Kanal drosselt.

Problematisch ist bei der Verwendung einer Vielzahl von radialen Zulauföffnungen, dass das Druckmedium im Innern des Gehäuses des elektromagnetischen Fluidventils aufeinander zuströmt und dies dort zu Verwirbelungen führt. Ein solcher instabiler Strömungszustand, also ein Wechsel von turbulenter zu laminarer Strömung in fluiddurchströmten Ventilen ist problematisch, weil hierdurch schwankende Strömungskräfte entstehen.

Die Erfindung hat das Ziel, solche schwankenden Strömungskräfte zu vermeiden oder zumindest zu verringern und von Anfang an dafür zu sorgen, dass in das Gehäuse des elektromagnetischen Fluidventils nur eine laminare Strömung des Druckmediums erfolgt.

Dieses Ziel wird durch ein elektromagnetisches Fluidventil mit den Merkmalen des Anspruchs 1 gelöst.

Weiterbildungen der Erfindung sind Gegenstand der Unteransprüche.

Die Erfindung beruht im Wesentlichen darauf, in den Strömungskanal des Gehäuses einen Bolzen mit einer besonderen Außenkontur einzusetzen, durch welchen das durch die Zulauföffnungen zugeführte Druckmedium in Richtung der Ablauföffnung gezielt umgelenkt wird.

In der nachfolgenden einzigen Figur, ist ein Ausführungsbeispiel eines solchen elektromagnetischen Fluidventils in Schnittdarstellung gezeigt.

Da der grundsätzliche Aufbau eines elektromagnetischen Fluidventils, insbesondere eines elektromagnetischen Proportionalventils, dem Fachmann ohne weiteres klar ist, wird im Nachfolgenden lediglich auf diejenigen Komponenten eingegangen, die für das Verständnis der Erfindung vorliegend wesentlich sind.

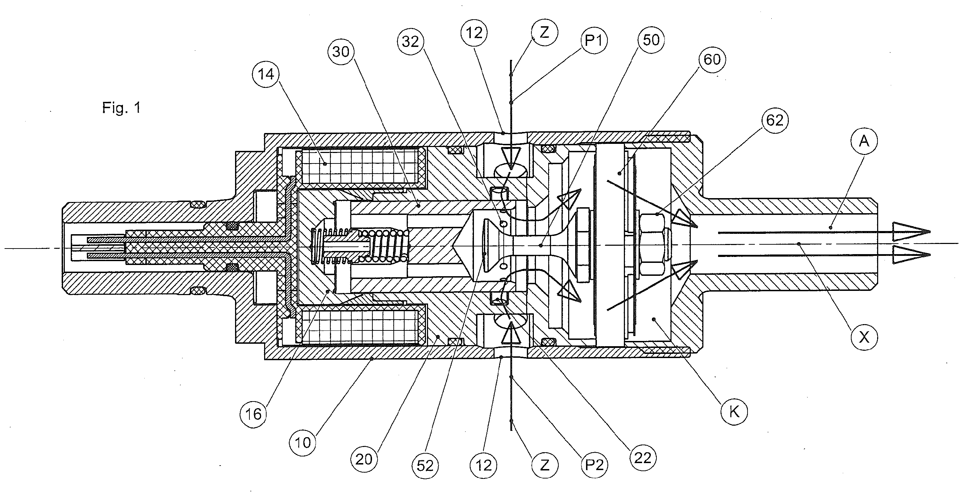

Wie Figur 1 zeigt, verfügt das elektromagnetische Fluidventil über ein äußeres Gehäuseteil 10 mit mehreren radialen Zulauföffnungen 12. Dabei ist der Zulauf des Druckmediums mit Z bezeichnet. Im Inneren dieses Gehäuseteils 10 sitzt ein weiteres Gehäuseteil 12, welches ebenfalls Zulauföffnungen 22 aufweist, die mit den zuvor erwähnten Zulauföffnungen 12 des ersten Gehäuseteils 10 korrespondieren. Im Inneren dieses zweiten Gehäuseteils 20 sitzt ein beweglicher Schieber 30, über den die Zulauföffnungen 22 des zweiten Gehäuseteils 20 mehr oder weniger verschließbar sind. Im dargestellten Ausführungsbeispiel verfügt der als Innenschieber ausgebildete Schieber 30 hierfür über Bohrungen 32, welche axial an den Zulauföffnungen 22 vorbeischiebbar sind. Anstelle der Bohrungen 32 ist es ohne weiteres möglich, dass der Schieber 30 etwas kürzer als in Figur 1 gestaltet ist und mit seinem vorderen, stirnseitigen Ende die Zulauföffnungen 22 mehr oder weniger verschließt.

Der Schieber 30 wird in an sich bekannter Weise über einen Elektromagneten durch Bestromung der Spule 14 bewegt. Hierfür ist im Inneren des Gehäuses 10 noch ein Polkern 16 vorgesehen.

Wie die Figur 1 ebenfalls zeigt, verfügt das elektromagnetische Fluidventil über einen rechts dargestellten Ablauf A für das Druckmedium. Zwischen den Zulauföffnungen 12, 22 und dem Ablauf befindet sich ein Kanal K, durch den das Druckmedium geführt wird.

Damit es zu einer gezielten Strömungsführung des Druckmediums von den Zuläufen 12, 22 zu dem Ablauf A kommt, befindet sich zentrisch zur Mittenachse X ein Bolzen 50 mit einer besonderen Außenkontur innerhalb des Gehäuses 10. Der Bolzen 50 überragt mit seiner der Ablauföffnung A abgewandten Stirnseite 52 die zuvor erwähnten Öffnungen 12, 22 und die Bohrungen 32 vollständig und hat mindestens annähernd einen Außendurchmesser an seiner Stirnseite 52, der mindestens annähernd den Innendurchmesser des Schiebers 30 entspricht. Die Außenkontur des Bolzens 50 ist im Bereich der Bohrungen 12, 22 so gestaltet, dass ein gezieltes Umlenken des Druckmediums von den Zuläufen 12, 22 zu dem Ablauf A erfolgt. Hierfür ist die Außenkontur im Bereich der Öffnungen 12, 22 mindestens annähernd kegelig, pyramidenförmig oder hyperboloidförmig gestaltet. Das Druckmedium wird, wie in Figur durch die Kanalführung K gezeigt, damit gezielt von den Zuläufen 12, 22 in Richtung Ablauföffnung A nach rechts umgelenkt.

Eine Verwirbelung des Druckmediums, wie dieses beispielsweise ohne Vorsehen eines solchen Bolzens 50 geschehen würde, ist damit vermieden. Würde der Bolzen 50 fehlen, würden die sich gegenüberliegenden Zuläufe 12, 22 dafür sorgen, dass das Druckmedium aufeinanderprallt. Selbst wenn ein Bolzen 50 vorgesehen würde, der lediglich eine zylindrische Außenkontur (ähnlich wie in der eingangs genannten US 2,543,455 offenbart) aufweist, würde das Druckmedium entgegengesetzt zur Zulaufrichtung an diesem Bolzen abprallen. Eine gezielte Strömungsführung des Druckmediums wäre mit einem solchen Bolzen mit zylindrischem Außenumfang damit ebenfalls nicht möglich.

Im dargestellten Ausführungsbeispiel befindet sich im rechten Teil des Gehäuses 10 noch ein Dämpferelement 60. Der Bolzen 50 ist mit diesem Dämpferelement 60 feststehend verbunden, beispielsweise mittels einer Schraube 62 feststehend verschraubt. Wie die Figur zeigt ist der Bolzen an dem links von dem Dämpferelement 60 dargestellten Teil mindestens annähernd im Schnitt als Doppelkegel oder als einschaliges Hyperboloid ausgebildet.

### Bezugszeichenliste

- 10: Erstes Gehäuseteil
- 12: Öffnungen
- 14: Spule
- 16: Polkern

- 20: Zweites Gehäuseteil
- 22: Öffnungen

- 30: Schieber
- 32: Bohrung

- 50: Bolzen
- 52: Stirnseite

- 60: Dämpferelement
- 62: Schraube

- K: Kanal
- A: Ablauf
- Z: Zulauf
- X: Achse

## Patentansprüche

1. Elekromagnetisches Fluidventil zur Durchflussregelung eines durch ein Gehäuseteil (10, 20) fließenden Druckmediums, wobei das Gehäuseteil (10, 20) mindestens zwei zueinander gegenüberliegende Zulauföffnungen (12, 22) und mindestens eine Ablauföffnung (A) für das Druckmedium aufweist und ein zwischen den Zulauföffnungen (12, 22) und der Ablauföffnung (A) befindlicher Kanal (K) mittels eines axial beweglichen Schiebers (30) zur Durchflussregelung des Druckmediums mehr oder weniger weit verschließbar ist, wobei zentrisch zur Mittenachse (X) des Fluidventils ein Bolzen (50) in den Kanal (K) ragt, **gekennzeichnet durch** folgende Merkmale:
- der Bolzen (50) ist zur Strömungsführung im Bereich der Zulauföffnungen (12, 22) mit einer Außenkontur versehen, welche mindestens annähernd kegelig, pyramidenförmig oder hyperboloidförmig gestaltet ist, so dass das von den Zulauföffnungen (12, 22) zuströmende Druckmedium auf die Außenkontur des Bolzens (50) aufprallt und in Richtung der mindestens einen Ablauföffnung (A) umgelenkt wird

2. Elektromagnetisches Fluidventil nach Anspruch 1, **dadurch gekennzeichnet, dass** der Bolzen (50) mindestens annähernd eine Außenkontur in Form eines Doppelkegels oder eines einschaligen Hyperboloids aufweist.

3. Elektromagnetisches Fluidventil nach Anspruch 1 oder 2, **dadurch gekennzeichnet, dass** der Bolzen (50) mit einem Dämpferelement (60) feststehend verbunden, vorzugsweise verschraubt ist.

4. Elektromagnetisches Fluidventil nach einem der Ansprüche 1 bis 3,
**dadurch gekennzeichnet, dass** der Schieber (30) als Innenschieber ausgebildet ist.

5. Elektromagnetisches Fluidventil nach einem der Ansprüche 1 bis 4,
**dadurch gekennzeichnet, dass** der Bolzen (50) die Zulauföffnungen (12, 22) vollständig axial überragt.

6. Elektromagnetisches Fluidventil nach Anspruch 5,
**dadurch gekennzeichnet, dass** die der Ablauföffnung (A) abgewandte Stirnfläche (52) des Bolzens (50) einen Durchmesser aufweist, der mindestens annähernd dem Innendurchmesser des beweglichen Schiebers (30) entspricht.

## Claims

1. Electromagnetic fluid valve for regulating the throughflow of a pressure medium flowing through a housing part (10, 20), wherein the housing part (10, 20) has at least two inlet openings (12, 22) lying opposite one another and at least one outlet opening (A) for the pressure medium, and a channel (K) located between the inlet openings (12, 22) and the outlet opening (A) can be closed to a greater or lesser extent by means of an axially movable slide (30) for regulating the throughflow of the pressure medium, wherein a pin protrudes into the channel (K) centrally with respect to the centre axis (X) of the fluid valve, **characterised by** the following features:
- for guiding the flow in the region of the inlet openings (12, 22) the pin (50) is provided with an outer contour which has an at least approximately conical, pyramidal or hyperbolic design, so that the pressure medium flowing in from the inlet openings (12, 22) strikes the outer contour of the pin (50) and is deflected in the direction of the at least one outlet opening (A).

2. Electromagnetic fluid valve according to claim 1, **characterised in that** the pin (50) has at least approximately an outer contour in the form of a double cone or a single-shell hyperboloid.

3. Electromagnetic fluid valve according to claim 1 or 2, **characterised in that** the pin (50) is fixedly connected, preferably screwed, to a damper element (60).

4. Electromagnetic fluid valve according to one of claims 1 to 3, **characterised in that** the slide (300) is configured as an inner slide.

5. Electromagnetic fluid valve according to one of claims 1 to 4, **characterised in that** the pin (50) protrudes completely axially beyond the inlet openings (12, 22).

6. Electromagnetic fluid valve according to claim 5, **characterised in that** the end face (52) of the pin (50) facing away from the outlet opening (A) has a diameter which corresponds at least approximately to the internal diameter of the movable slide (30).

## Revendications

1. Soupape de fluide électromagnétique permettant de régler le débit d'un fluide sous pression circulant au travers d'une partie de boîtier (10, 20), la partie de boîtier (10, 20) comprenant au moins deux ouvertures d'entrée (12, 22) opposées l'une à l'autre et au moins une ouverture de sortie (A) du fluide sous pression, et un canal (K) situé entre les ouvertures d'entrée (12, 22) et l'ouverture de sortie (A), pouvant être fermé plus ou moins largement au moyen d'un coulisseau (30) mobile axialement pour permettre de régler le débit de fluide sous pression, un goujon (50) pénétrant dans le canal (K) au centre de l'axe médian (X) de la soupape de fluide,
**caractérisée par** les caractéristiques suivantes :
le goujon (50) comporte, pour permettre le guidage du flux dans la zone des ouvertures d'entrée (12, 22) un contour externe qui est au moins approximativement en forme de cône, de pyramide ou d'hyperboloïde de sorte que le fluide sous pression entrant par les ouvertures d'entrée (12, 22) soit projeté sur le contour externe du goujon (50) et soit dévié en direction de l'ouverture de sortie (A).

2. Soupape de fluide électromagnétique conforme à la revendication 1,
**caractérisée en ce que**
le goujon (50) a au moins approximativement un contour externe en forme de double cône ou d'hyperboloïde à une nappe.

3. Soupape de fluide électromagnétique conforme à la revendication 1 ou 2,
**caractérisée en ce que**
le goujon (50) est relié solidairement à un élément d'amortissement (60) et de préférence vissé sur celui-ci.

4. Soupape de fluide électromagnétique conforme à l'une des revendications 1 à 3,
**caractérisée en ce que**
le coulisseau (30) est réalisé sous la forme d'un coulisseau interne.

5. Soupape de fluide électromagnétique conforme à l'une des revendications 1 à 4,
**caractérisée en ce que**
le goujon (50) dépasse totalement axialement des ouvertures d'entrée (12, 22).

6. Soupape de fluide électromagnétique conforme à la revendication 5,
**caractérisée en ce que**
la face frontale (52) du goujon (50) située à l'opposé de l'ouverture de sortie (A) a un diamètre qui correspond au moins approximativement au diamètre interne du coulisseau mobile (30).
